# EUROPEAN PATENT APPLICATION

(11) **EP 4 645 500 A1**
(43) Date of publication of application: **05.11.2025**
(21) Application number: 23910909.3
(22) Date of filing: 29.12.2023
(51) Int. Cl.: H01M 10/0562

(54) **SOLID ELECTROLYTE, SOLID-STATE BATTERY AND ELECTRICAL APPARATUS**

(30) Priority: 30.12.2022 CN 202211742332
(71) Applicant: BYD Company Limited, Shenzhen, Guangdong 518118 (CN)
(72) Inventor: SHI, Zhuo, Shenzhen, Guangdong 518118 (CN); WANG, Guoshuai, Shenzhen, Guangdong 518118 (CN); FU, Haoyu, Shenzhen, Guangdong 518118 (CN); GUO, Zizhu, Shenzhen, Guangdong 518118 (CN)
(74) Representative: Mathys & Squire
(86) International application number: PCT/CN2023/143106
(87) International publication number: WO 2024/140995

(57) **Abstract**

A solid electrolyte, comprising a first solid electrolyte layer and a second solid electrolyte layer. The first solid electrolyte layer comprises a first sulfide solid electrolyte, and the second solid electrolyte layer comprises a phosphide solid electrolyte.

## Description

### CROSS-REFERENCE TO RELATED APPLICATIONS

The present disclosure claims priority to and benefits of Chinese Patent Application No. 202211742332.8, filed on December 30, 2022 and entitled "SOLID ELECTROLYTE, SOLID-STATE BATTERY, AND ELECTRICAL DEVICE". The entire content of the above-referenced application is incorporated herein by reference.

### FIELD

The present disclosure relates to the field of battery technologies, and specifically, to a solid electrolyte, a solid-state battery, and an electrical device.

### BACKGROUND

The development of sulfide-based all-solid-state batteries has attracted wide attention in the industry because sulfide solid electrolytes have features of high ionic conductivity, low grain boundary impedance, and non-combustibility. However, the reduction potential of the sulfide solid electrolyte is high (approximately 1.7 V), there are problems of interfacial reactions on the negative electrode side, and the formed interfacial layer has a poor capability for transmitting ions. As a result, interfacial resistance is increased, which ultimately leads to battery failure.

### SUMMARY

In view of this, the present disclosure provides a solid electrolyte. When the solid electrolyte is used in a solid-state battery, interfacial ionic impedance between the solid electrolyte and a negative electrode is low, so that performance of the solid-state battery is optimized.

Specifically, a first aspect of the present disclosure provides a solid electrolyte, including a first solid electrolyte layer and a second solid electrolyte layer. The first solid electrolyte layer includes a first sulfide solid electrolyte. The second solid electrolyte layer includes a phosphide solid electrolyte.

When the solid electrolyte of the present disclosure is used in a solid-state battery, and the second solid electrolyte layer is arranged adjacent to a negative electrode, an interfacial layer between the solid electrolyte and the negative electrode may include many components with high ionic conductivity, so that interfacial impedance can be effectively reduced, and overall electron conductivity of the solid electrolyte can be maintained to be low, thereby achieving an objective of optimizing performance of the solid-state battery.

According to a second aspect, the present disclosure provides a solid-state battery, including a positive electrode, a negative electrode, and the solid electrolyte according to the first aspect. The solid electrolyte is arranged between the positive electrode and the negative electrode. The first solid electrolyte layer is arranged between the positive electrode and the second solid electrolyte layer. The second solid electrolyte layer is arranged between the first solid electrolyte layer and the negative electrode.

According to a third aspect, the present disclosure provides an electrical device, including the solid-state battery according to the second aspect.

### DETAILED DESCRIPTION

The following clearly and completely describes the technical solutions in embodiments of the present disclosure with reference to the accompanying drawings in the embodiments of the present disclosure. It will be appreciated that, the described embodiments are merely some rather than all of the embodiments of the present disclosure. All other embodiments obtained by a person of ordinary skill in the art based on embodiments of the present disclosure without creative efforts shall fall within the protection scope of the present disclosure.

The development of a sulfide-based all-solid-state battery has attracted wide attention in the industry because sulfide solid electrolytes have features of high ionic conductivity, low grain boundary impedance, and non-combustibility. However, a stable electrochemical window of a sulfide solid electrolyte is narrow. On the negative electrode side, because the reduction potential of the sulfide solid electrolyte is high (approximately 1.7 V), there are problems of interfacial reactions. Especially, when the sulfide solid electrolyte is used together with a negative electrode having a high energy density such as lithium metal or some lithium alloys, interfacial ionic impedance is sharply increased. To reduce the interfacial ionic impedance with the negative electrode and optimize performance of the solid-state battery, the present disclosure provides a solid electrolyte, including a first solid electrolyte layer and a second solid electrolyte layer. The first solid electrolyte layer includes a first sulfide solid electrolyte. The second solid electrolyte layer includes a phosphide solid electrolyte. When the solid electrolyte provided in the present disclosure is used in the solid-state battery, the solid electrolyte may be arranged between a positive electrode and a negative electrode. The first solid electrolyte layer is arranged adjacent to the positive electrode. The second solid electrolyte layer is arranged adjacent to the negative electrode. Because the second solid electrolyte layer includes the phosphide solid electrolyte having a low reduction potential, stability of an interface between the solid electrolyte and the negative electrode is improved. In addition, the phosphide solid electrolyte in the second solid electrolyte layer allows the interfacial layer between the solid electrolyte and the negative electrode to include more components with high ionic conductivity (for example, Li₃P), so that interfacial ionic impedance between the solid electrolyte and the negative electrode can be effectively reduced. In addition, the first sulfide solid electrolyte in the first solid electrolyte layer may maintain electron conductivity of the solid electrolyte itself at a low level. Therefore, the solid electrolyte of the present disclosure can effectively reduce the interfacial ionic impedance between the solid electrolyte and the negative electrode and maintain the electron conductivity of the solid electrolyte at a low level, to optimize charge and discharge performance and cycle performance of the solid-state battery.

In this implementation of the present disclosure, the first sulfide solid electrolyte may be a known sulfide solid electrolyte. For example, the first sulfide solid electrolyte may be selected from one or more of a fast ionic conductor type sulfide solid electrolyte, an argyrodite type sulfide solid electrolyte, a glass-ceramics type sulfide solid electrolyte, a thiophosphate system sulfide solid electrolyte, and a thiosilicate system sulfide solid electrolyte, but is not limited thereto. For example, the fast ionic conductor type sulfide solid electrolyte may be one or more of Li₃PS₄, Li₁₀GeP₂S₁₂, and Li₉.₅₄Si_{1.74}P_{1.44}S_{11.7}Cl_{0.3}. The argyrodite type sulfide solid electrolyte may be Li_{6-z}PS_{5-z}Cl_{1+z}(0≤z≤1) or the like. The glass-ceramics type sulfide solid electrolyte may be LiI-(70Li₂S-30P₂S₅) or the like. The thiophosphate system sulfide solid electrolyte may be one or more of Li₇P₃S₁₁, Li₄PS₄I, and Li₇P₂S₈I. The thiosilicate system sulfide solid electrolyte may be Li₂SiS₃ or the like. The phosphide solid electrolyte may be a phosphorus-containing compound having specific ionic conductivity, for example, room temperature ionic conductivity of 0.01 mS/cm or more.

In some implementations of the present disclosure, the phosphide solid electrolyte includes a phosphorus element having a valency of -3. The valency of the phosphorus element in the phosphide solid electrolyte may be entirely -3, or may be partially -3. When the phosphide solid electrolyte includes a phosphorus element having a valency of -3, conductivity of the interfacial layer between the solid electrolyte and the negative electrode may be improved, so that the charge and discharge performance and the cycle performance of the solid-state battery are further improved.

In some implementations of the present disclosure, the reduction potential of the phosphide solid electrolyte is between 0 V and 1.2 V. When the reduction potential of the phosphide solid electrolyte falls within the range, electrochemical stability of the solid electrolyte to the negative electrode is higher, interfacial side reactions are minor, and the formed interfacial layer is thinner, so that the stability of the interface between the solid electrolyte and the negative electrode can be further improved, the interfacial ionic impedance is reduced, the charge and discharge performance of the solid-state battery is improved, and cycle life of the solid-state battery is extended.

In some implementations of the present disclosure, the phosphide solid electrolyte is at least one of Li₃ₓ₋₃APₓ and Li_{3y-4}BP_{y}. The element P has a valency of -3. The element A is selected from at least one of Al, Ga, and In. The element B is selected from at least one of Si, Ge, and Sn. x is an integer between 2 and 4. y is an integer between 2 and 6.

In some implementations of the present disclosure, the phosphide solid electrolyte includes one or more of Li₉AlP₄, Li₉GaP₄, Li₉InP₄, Li₃AlP₂, Li₃GaP₂, Li₃InP₂, LisSiP₄, Li₈GeP₄, Li₈SnP₄, Li₂SiP₂, Li₂GeP₂, Li₂SnP₂, Lit₄SiP₆, and Li₁₄GeP₆. In some implementations of the present disclosure, the phosphide solid electrolyte includes at least one of Li₉AlP₄, Li₉GaP₄, Lit₄SiP₆, and Li₁₄GeP₆. Room temperature ionic conductivity of these phosphide solid electrolytes are in an order of mS/cm, which helps to further improve conductivity of the solid electrolyte, to optimize the charge and discharge performance and the cycle performance of the battery.

In some implementations of the present disclosure, the first sulfide solid electrolyte is selected from one or more of Li₃PS₄, Li₁₀GeP₂S₁₂ (LGPS), Li_{9.54}Si_{1.74}P_{1.44}S_{11.7}Cl_{0.3}, Li_{6-z}PS_{5-z}Cl_{1+z}, LiI-(70Li₂S-30P₂S₅), Li₇P₃S₁₁, Li₄PS₄I, Li₇P₂S₈I, and Li2SiS3. In Li_{6-z}PS_{5-z}Cl_{1+z}, a value range of z is 0≤z≤1. These sulfide solid electrolytes have high ionic conductivity and low electron conductivity, and have good adaptability with the phosphide solid electrolyte, which helps to improve electrochemical performance of the solid-state battery.

In some implementations of the present disclosure, a total mass of the first solid electrolyte layer is used as a reference, and content of the first sulfide solid electrolyte in the first solid electrolyte layer is between 90 wt.% and 99.9 wt.%. For example, the content of the first sulfide solid electrolyte in the first solid electrolyte layer may be 90 wt.%, 92 wt.%, 94 wt.%, 96 wt.%, 98 wt.%, or 9.9 wt.%. When the content of the first sulfide solid electrolyte in the first solid electrolyte layer is within the range, an ion transmission capability of the solid electrolyte can be improved, structural stability of the solid electrolyte can be ensured, and the charge and discharge performance and the cycle performance of the solid-state battery is improved.

In some implementations of the present disclosure, a total mass of the second solid electrolyte layer is used as a reference, and content of the phosphide solid electrolyte in the second solid electrolyte layer is between 90 wt.% and 99.9 wt.%. When the content of the phosphide solid electrolyte in the second solid electrolyte layer is within the range, the interfacial ionic impedance between the solid electrolyte and the negative electrode can be further reduced, so that performance of the battery is optimized.

In some implementations of the present disclosure, the second solid electrolyte layer further includes a second sulfide solid electrolyte. To be specific, the second solid electrolyte layer includes the second sulfide solid electrolyte and the phosphide solid electrolyte. Types of the first sulfide solid electrolyte and the second sulfide solid electrolyte may be the same or different. The first sulfide solid electrolyte and the second sulfide solid electrolyte may be independently a known sulfide solid electrolyte. For example, the second sulfide solid electrolyte may be selected from one or more of a fast ionic conductor type sulfide solid electrolyte, an argyrodite type sulfide solid electrolyte, a glass-ceramics type sulfide solid electrolyte, a thiophosphate system sulfide solid electrolyte, and a thiosilicate system sulfide solid electrolyte, but is not limited thereto. Specifically, the fast ionic conductor type sulfide solid electrolyte may be one or more of Li₃PS₄, LGPS, and Li_{9.54}Si_{1.74}P_{1.44}S_{11.7}Cl_{0.3}. The argyrodite type sulfide solid electrolyte may be Li_{6-z}PS_{5-z}Cl_{1+z} (where a value range of z is 0≤x≤1) or the like. The glass-ceramics type sulfide solid electrolyte may be LiI-(70Li₂S-30P₂S₅) or the like. The thiophosphate system sulfide solid electrolyte may be one or more of Li₇P₃S₁₁, Li₄PS₄I, and Li₇P₂S₈I. The thiosilicate system sulfide solid electrolyte may be Li₂SiS₃ or the like.

In some implementations of the present disclosure, the total mass of the second solid electrolyte layer is used as a reference, and content of the second sulfide solid electrolyte and the phosphide solid electrolyte in the second solid electrolyte layer is between 90 wt.% and 99.9 wt.%. In other words, in the second solid electrolyte layer, a sum of content of the second sulfide solid electrolyte and content of the phosphide solid electrolyte is between 90 wt.% and 99.9 wt.%.

In some implementations of the present disclosure, the first solid electrolyte layer and the second solid electrolyte layer each further include a binder. The total mass of the first solid electrolyte layer is used as a reference, and content of the binder in the first solid electrolyte layer is between 0.1 wt.% and 10 wt.%. The total mass of the second solid electrolyte layer is used as a reference, and content of the binder in the second solid electrolyte layer is between 0.1 wt.% and 10 wt.%. A total mass of the solid electrolyte is used as a reference, and content of a binder in the solid electrolyte is between 0.1% wt.% and 10% wt.%. The binder can improve the structural stability of the solid electrolyte. The binder in the solid electrolyte may be selected from one or more of polyvinylidene difluoride (PVDF), polytetrafluoroethylene (PTFE), styrene-butadiene rubber (SBR), nitrile butadiene rubber (NBR), polyacrylate, poly(acrylic acid) (PAA), alkyl cellulose, and polyethylene oxide (PEO).

In some implementations of the present disclosure, a total mass of the second sulfide solid electrolyte and the phosphide solid electrolyte in the second solid electrolyte layer is used as a reference, and in the second solid electrolyte layer, content of the second sulfide solid electrolyte is between 10 wt.% and 95 wt.%, and content of the phosphide solid electrolyte is between 5 wt.% and 90 wt.%. To be specific, in a sum of masses of the second sulfide solid electrolyte and the phosphide solid electrolyte in the second solid electrolyte layer, a percentage of the mass of the second sulfide solid electrolyte is between 10 wt.% and 95 wt.%, and a percentage of the mass of the phosphide solid electrolyte is between 5 wt.% and 90 wt.%. For example, in the second solid electrolyte layer, the content of the second sulfide solid electrolyte may be 10 wt.%, 20 wt.%, 30 wt.%, 40 wt.%, 50 wt.%, 60 wt.%, 70 wt.%, 80 wt.%, 90 wt.%, or 95 wt.%. The content of the phosphide solid electrolyte may be 5 wt.%, 10 wt.%, 20 wt.%, 30 wt.%, 40 wt.%, 50 wt.%, 60 wt.%, 70 wt.%, 80 wt.%, or 90 wt.%. When the content range is satisfied, the solid electrolyte can improve the stability of the interface between the solid electrolyte and the negative electrode, and reduce impedance of the interfacial layer between the solid electrolyte and the negative electrode while maintaining low electron conductivity, so that a capacity of the solid-state battery is increased, and the cycle life of the solid-state battery is extended.

In some implementations of the present disclosure, the total mass of the second sulfide solid electrolyte and the phosphide solid electrolyte in the second solid electrolyte layer is used as a reference, and in the second solid electrolyte layer, the content of the second sulfide solid electrolyte is between 30 wt.% and 70 wt.%, and the content of the phosphide solid electrolyte is between 30 wt.% and 70 wt.%. When the content range is satisfied, the solid electrolyte can have both low electron conductivity and low impedance of the interfacial layer with the negative electrode, so that the capacity of the solid-state battery is increased, and the cycle life of the solid-state battery is extended.

In some implementations of the present disclosure, a thickness of the first solid electrolyte layer is between 15 µm and 200 µm; and a thickness of the second solid electrolyte layer is between 1 µm and 15 µm. For example, the thickness of the first solid electrolyte layer may be 20 µm, 40 µm, 60 µm, 80 µm, 100 µm, 120 µm, 140 µm, 160 µm, 180 µm, or 200 µm. The thickness of the second solid electrolyte layer may be 1 µm, 3 µm, 5 µm, 7 µm, 9 µm, 11 µm, 13 µm, or 15 µm. The thickness range is satisfied, so that the solid electrolyte can have good interface stability with the negative electrode, and maintain low electron conductivity, thereby improving the electrochemical performance of the solid-state battery.

In some implementations of the present disclosure, the thickness of the first solid electrolyte layer is between 15 µm to 50 µm; and the thickness of the second solid electrolyte layer is between 3 µm and 7 µm. The thickness range is satisfied, so that the stability of the interface between the solid electrolyte and the negative electrode can be further improved, and low electron conductivity can be maintained, thereby improving the electrochemical performance of the solid-state battery.

In some implementations of the present disclosure, D50 of the first sulfide solid electrolyte is between 1 µm and 10 µm; D50 of the second sulfide solid electrolyte is between 0.5 µm and 4 µm; and D50 of the phosphide solid electrolyte is between 0.5 µm and 4 µm. For example, D50 of the first sulfide solid electrolyte may be 1 µm, 2 µm, 3 µm, 4 µm, 5 µm, 6 µm, 7 µm, 8 µm, 9 µm, or 10 µm; D50 of the second sulfide solid electrolyte may be 0.5 µm,1 µm, 2 µm, 3 µm, or 4 µm; and D50 of the phosphide solid electrolyte may be 0.5 µm, 1 µm, 2 µm, 3 µm, or 4 µm. When D50 of the first sulfide solid electrolyte, D50 of the second sulfide solid electrolyte, and D50 of the phosphide solid electrolyte are controlled to be in the foregoing range, densification of the solid electrolyte can be improved, and the ionic conductivity of the solid electrolyte can be improved.

In some implementations of the present disclosure, D50 of the first sulfide solid electrolyte is between 2 µm and 5 µm, D50 of the second sulfide solid electrolyte is between 0.7 µm and 2 µm, and D50 of the phosphide solid electrolyte is between 0.7 µm and 2 µm. When D50 of the first sulfide solid electrolyte, D50 of the second sulfide solid electrolyte, and D50 of the phosphide solid electrolyte are controlled to be in the foregoing range, the densification and the ionic conductivity of the solid electrolyte can be further improved.

The present disclosure further provides a solid-state battery. The solid-state battery includes a positive electrode, a negative electrode, and the foregoing solid electrolyte. The solid electrolyte is arranged between the positive electrode and the negative electrode. The first solid electrolyte layer is arranged between the positive electrode and the second solid electrolyte layer. The second solid electrolyte layer is arranged between the first solid electrolyte layer and the negative electrode.

In the solid-state battery of the present disclosure, compared with a sulfide solid electrolyte, a phosphide solid electrolyte has a lower reduction potential. Therefore, the second solid electrolyte layer including the phosphide solid electrolyte is arranged on a side close to the negative electrode, so that electrochemical stability of the solid electrolyte to the negative electrode can be improved, interfacial side reaction between the solid electrolyte and the negative electrode can be minor, and a formed interfacial layer becomes thinner, thereby effectively reducing interfacial ionic impedance and optimizing performance of the solid-state battery. In addition, the first sulfide solid electrolyte in the first solid electrolyte layer can maintain electron conductivity of the solid electrolyte itself at a low level. Therefore, the solid electrolyte of the present disclosure.

In this implementation of the present disclosure, the solid-state battery may be an all-solid-state battery, or may be a semi-solid-state battery.

In this implementation of the present disclosure, the positive electrode may include a positive electrode current collector and a positive electrode material layer arranged on at least one side surface of the positive electrode current collector. The positive electrode current collector may include, but is not limited to, a metal film, a foam metal mesh, and the like, and may be specifically an aluminum foil, a carbon-coated aluminum foil, or the like. The positive electrode material layer may include a positive electrode active material, a solid electrolyte material, a conductive agent, a binder, and the like. A weight of the positive electrode material layer is used as a reference, and content of the positive electrode active material is between 50 wt.% and 85 wt.%, content of the solid electrolyte is between 5 wt.% and 49 wt.%, content of the binder is between 0.1 wt.% and 10 wt.%, and content of the conductive agent is between 0 wt.% and 10 wt.%. The positive electrode active material may be selected from a known positive electrode active material used in a rechargeable battery, for example, a material that can reversibly deintercalate and intercalate a lithium ion, including but not limited to, an olivine positive electrode active material (for example, LiFePO₄), a layered oxide-type positive electrode active material (for example, ternary materials NCM and NCA, or lithium cobalt oxide LiCoO₂), a spinel positive electrode active material (for example, LiMn₂O₄ or Li₄Ti₅O₁₂), and sulfur and a sulfide positive electrode material (for example, S₈, FeS₂, or CuS). The solid electrolyte material may be selected from a known sulfide solid electrolyte and a known halide solid electrolyte. For example, the sulfide solid electrolyte may be selected from Li₃PS₄, LGPS, Li_{9.54}S1_{1.74}P_{1.44}S_{11.7}Cl_{0.3}, Li_{6-z}PS_{5-z}Cl_{1+z}, LiI-(70Li₂S-30P₂S₅), Li₇P₃S₁₁, Li₄PS₄I, Li₇P₂S₈I, Li₂SiS₃, and the like. The halide solid electrolyte may be selected from Li₃InCl₆, Li₃YCl₆, and the like. The binder may be selected from a binder commonly used in the positive electrode, including but not limited to, one or more of polyvinylidene difluoride (PVDF), polytetrafluoroethylene (PTFE), styrene-butadiene rubber (SBR), nitrile butadiene rubber (NBR), polyacrylate, poly(acrylic acid) (PAA), alkyl cellulose, and polyethylene oxide (PEO). The conductive agent is selected from a conductive agent commonly used in the positive electrode, for example, acetylene black, a carbon nanotube, a carbon fiber, and carbon black.

In this implementation of the present disclosure, the negative electrode may be selected from a known negative electrode used in a rechargeable battery. For example, the negative electrode is selected from a lithium foil, a lithium alloy foil, a copper foil adhered to with lithium metal, a stainless steel foil adhered to with lithium metal, a copper foil adhered to with a lithium alloy, a stainless steel foil adhered to with a lithium alloy, and the like. The lithium alloy may be selected from one or more of a lithium indium alloy, a lithium silicon alloy, a lithium boron alloy, a lithium tin alloy, a lithium magnesium alloy, a lithium aluminum alloy, a lithium silver alloy, and a silicon-based negative electrode.

In some implementations of the present disclosure, after the solid-state battery is charged or discharged for a first time, an interfacial layer is formed between the second solid electrolyte layer and the negative electrode, and the interfacial layer includes Li₃P. Room temperature ionic conductivity of Li₃P is in an order of 10⁻⁴ S/cm. The ionic conductivity is high, and the interfacial layer may have high ionic conductivity, so that overall impedance of the solid-state battery is reduced, and the performance of the solid-state battery is improved. Components of the interfacial layer may be obtained through analysis by combining XPS with nuclear magnetic resonance.

In some implementations of the present disclosure, content of Li₃P in the interfacial layer is between 5 wt.% and 25 wt.% based on a mass of the interfacial layer. The content of Li₃P is within the range, so that the ionic conductivity of the interfacial layer can be further increased, the overall impedance of the solid-state battery is reduced, and the interfacial layer has a stable structure. In addition, excessively high electron conductivity of the interfacial layer caused by excessively high content of Li₃P can be avoided. In this way, that the negative electrode continuously interacts with the electrolyte to cause an excessively thick interfacial layer and excessively high impedance of the interfacial layer, affecting the performance of the battery is avoided.

In some implementations of the present disclosure, the interfacial layer further includes one or more of Li₂S, Li₂Sₐ, M1_{b}P, and M2_{c}S. M1 and M2 are each independently selected from one or more of Si, Ge, Sn, Al, Ga, and In. Value ranges of a, b, and c are respectively 2≤a≤8, 0.75≤b≤1.5, and 0.5≤c≤1. The interfacial layer further includes one or more of Li₂S, Li₂Sₐ, M1_{b}P, and M2_{c}S. When the second sulfide solid electrolyte includes a halogen element X, the interfacial layer further includes a LiX component, where X is selected from F, Cl, Br, or I. In these interfacial layer components, Li₂S, Li₂Sₐ, and LiX can maintain the electron conductivity of the interfacial layer at a low level. Therefore, that the negative electrode continuously reduces the electrolyte to cause an excessively thick interfacial layer and excessively high interfacial ionic impedance is avoided. M1_{b}P and M2_{c}S can suppress formation of dendritic lithium to some extent, helping to improve cycle stability of the battery.

In some implementations of the present disclosure, the negative electrode includes lithium metal or a lithium alloy. Such a negative electrode has a high lithium intercalation capacity, so that the solid-state battery has high energy density.

In some implementations of the present disclosure, a method for preparing the solid-state battery includes the following steps.
(1) The positive electrode is prepared by using a method such as wet coating or dry extrusion. The wet coating may be used to disperse a positive electrode active material, a solid electrolyte material, a conductive agent, and a binder in a solvent to obtain a positive electrode slurry, coat the positive electrode slurry to the positive electrode current collector, and obtain the positive electrode after the positive electrode current collector is dried, rolled, and divided. The positive electrode includes the positive electrode current collector and the positive material layer. The solvent herein is selected from a low-to-medium polarity solvent. The low-to-medium polarity solvent may be, for example, selected from one or more of methylcyclohexane, heptane, decane, methyl phenyl ether, cyclopentyl methyl ether, toluene, dimethylbenzene, butyl butyrate, and methyl benzoate. The dry extrusion may be used to extrude the positive electrode active material, the solid electrolyte material, the conductive agent, and the binder after uniformly mixing to form the positive electrode material layer.
(2) After the first sulfide solid electrolyte and the binder are mixed, the first sulfide solid electrolyte and the binder that are mixed are coated, stacked, or transferred to a surface of the positive electrode material layer, to form the first solid electrolyte layer. A binder in the first solid electrolyte layer may be selected from one or more of polyvinylidene difluoride (PVDF), polytetrafluoroethylene (PTFE), styrene-butadiene rubber (SBR), nitrile butadiene rubber (NBR), polyacrylate, poly(acrylic acid) (PAA), alkyl cellulose, and polyethylene oxide (PEO). The coating means that an electrolyte slurry made by dispersing the solid electrolyte and the binder in a solvent is directly coated to a surface of the positive electrode material layer, and then the electrolyte slurry is dried and rolled to directly form the solid electrolyte layer on a surface of the positive electrode. The stacking means that the electrolyte slurry is coated to a PET film by using a wet coating method. Then, the electrolyte slurry is peeled through rolling to form a self-supporting electrolyte film. Alternatively, a self-supporting electrolyte film is directly prepared by performing dry extrusion on the solid electrolyte and the binder. Then, the self-supporting electrolyte film is stacked on a positive electrode sheet, and the self-supporting electrolyte film and the positive electrode sheet are combined with certain pressure. The transfer means that the electrolyte layer that is formed on the PET film through wet coating and the positive electrode sheet are rolled relative to each other, to transfer the electrolyte layer from the PET film to a surface of a positive electrode layer.
(3) After the phosphide solid electrolyte and the binder are mixed, the phosphide solid electrolyte and the binder that are mixed are coated, stacked, or transferred to a surface of the first solid electrolyte layer, to form the second solid electrolyte layer. A binder in the second solid electrolyte layer may be selected from one or more of polyvinylidene difluoride (PVDF), polytetrafluoroethylene (PTFE), styrene-butadiene rubber (SBR), nitrile butadiene rubber (NBR), polyacrylate, poly(acrylic acid) (PAA), alkyl cellulose, and polyethylene oxide (PEO). When the second electrolyte layer includes the second sulfide solid electrolyte, the second sulfide solid electrolyte, the phosphide solid electrolyte, and the binder may be mixed and then coated, stacked, or transferred to the surface of the first solid electrolyte layer, to form the second solid electrolyte layer.
(4) A negative electrode sheet is pressed onto the second solid electrolyte layer, to obtain an all-solid-state battery.

The present disclosure further provides an electrical device, including the foregoing solid-state battery. The electrical device may be a vehicle, an energy storage power station, an electronic device, or the like. The vehicle may be a pure electric vehicle, a hybrid electric vehicle, or the like. The electronic device may be a 3C product or the like.

The following further describes this embodiment of the present disclosure with reference to a number of specific embodiments.

### Embodiment 1

### (1) Preparation of the phosphide solid electrolyte

In a glove compartment, according to a stoichiometric ratio of Li₉AlP₄, a total of 5 g of lithium metal powder, aluminum powder, and red phosphorus powder is accurately weighed and placed in a ball-milling tank lined with zirconia. Zirconia ball-milling beads are placed in the ball-milling tank. A ball-to-material ratio is controlled at 25:1. Ball milling is performed at a speed of 1000 RPM for 18h in a high-speed ball-milling machine. Cooling water is used to cool the ball-milling tank throughout the ball milling process to control a temperature during the ball milling at 15±5°C. After the ball milling is completed, powder is taken out.

A cold press machine is used to press the powder into a block, and the block is sealed in an ampoule. The ampoule is placed in a muffle furnace for sinter. A sinter temperature is controlled at 800°C, and sinter time is 24h. A sintered electrolyte sheet is ground into powder, that is, a corresponding Li₉AlP₄ solid electrolyte is obtained.

### (2) Preparation of the solid-state battery

The following steps are all completed in a dry room of which a dew point is lower than -50°C.

Step 1: 75 g of LiNi_{0.6}Mn_{0.2}Co_{0.2}O₂ (NCM622) positive electrode material, 20 g of solid electrolyte Li₆PS₅Cl, 3 g of a nitrile butadiene rubber binder, and 2 g of acetylene black are added to 100 g of a toluene solvent, which are then stirred in a vacuum mixer to form a stable and uniform positive electrode slurry. The positive electrode slurry is evenly and intermittently coated to two sides of an aluminum foil (where a size of the aluminum foil is defined as a width of 160 mm and a thickness of 16 µm), which is then baked at 373 K. After being pressed by a roll press, a positive electrode material layer with a single side thickness of 80 µm is formed on the two sides of the aluminum foil, to obtain a positive electrode sheet.

Step 2: 58.2 g of Li₆PS₅Cl and 1.8 g of the nitrile butadiene rubber binder are placed into 60 g of the toluene solution, which are thoroughly stirred until a stable and uniform slurry is formed. The solution is continuously coated on the positive electrode sheet, which is then baked at 373 K to obtain a positive electrode sheet-first solid electrolyte layer composite. A thickness of the first solid electrolyte layer is 50 µm. In step 2, D50 of Li₆PS₅Cl is 4 µm.

Step 3: 0.18 g of the nitrile butadiene rubber binder and 1.746 g of Li₉AlP₄ and 4.074 g of Li₆PS₅Cl mixed powder are placed into 6 g of the toluene solution, which are thoroughly stirred until a stable and uniform slurry is formed. The solution is continuously coated on the first solid electrolyte layer of the positive electrode sheet-first solid electrolyte layer composite, which is then baked at 373 K to obtain a positive electrode sheet-first solid electrolyte layer-second solid electrolyte layer composite. A thickness of the second solid electrolyte layer is 5 µm. In step 3, D50 of Li₆PS₅Cl is 1 µm, and D50 of Li₉AlP₄ is 1 µm.

Step 4: A positive electrode sheet-first solid electrolyte layer-second solid electrolyte layer composite layer is cut into a positive electrode sheet-first solid electrolyte layer-second solid electrolyte layer composite film with a size of 21 mm in length×41 mm in width.

Step 5: A lithium copper composite foil (that is, a copper foil adhered to with lithium metal) is selected as a negative electrode. A thickness of a lithium layer is 15 µm, and the composite foil is cut into a negative electrode film with a size of 20 mm×40 mm.

Step 6: The positive electrode sheet-first solid electrolyte layer-second solid electrolyte layer composite film obtained in step 4 and the negative electrode film obtained in step 5 are placed in alignment in a hot press machine, and hot pressing is performed at 453 K for 1h and pressure of 200 MPa. A sample is taken out after being vacuumed and sealed by using an aluminum-plastic film. Finally, the foregoing pressed sample is pressed in an isostatic press at 200 MPa for 300 seconds (s). Then, the solid-state battery in this embodiment is obtained, and is denoted as C1.

### Embodiment 2

(1) Preparation of the phosphide solid electrolyte: In a glove compartment, according to a stoichiometric ratio of Li₉GaP₄, a total of 5 g of lithium metal powder, gallium powder, and red phosphorus powder is accurately weighed and placed in a ball-milling tank lined with zirconia. Zirconia ball-milling beads are placed in the ball-milling tank. A ball-to-material ratio is controlled at 25:1. Ball milling is performed at a speed of 1000 RPM for 18h in a high-speed ball-milling machine. Cooling water is used to cool the ball-milling tank throughout the ball milling process to control a temperature during the ball milling at 15±5°C. After the ball milling is completed, powder is taken out.
   A cold press machine is used to press the powder into a block, and the block is sealed in an ampoule. The ampoule is placed in a muffle furnace for sinter. A sinter temperature is controlled at 400°C, and sinter time is 24h. A sintered electrolyte sheet is ground into powder, that is, a corresponding Li₉GaP₄ solid electrolyte is obtained.
(2) Preparation of the solid-state battery: In addition to that 1.746 g of Li₉AlP₄ is replaced with 1.746 g of Li₉GaP₄, steps for preparing the solid-state battery in Embodiment 2 are the same as those in Embodiment 1. The obtained solid-state battery is denoted as C2.

### Embodiment 3

(1) Preparation of the phosphide solid electrolyte: In a glove compartment, according to a stoichiometric ratio of Lit₄SiP₆, a total of 5 g of lithium metal powder, silicon powder, and red phosphorus powder is accurately weighed and placed in a ball-milling tank lined with zirconia. Zirconia ball-milling beads are placed in the ball-milling tank. A ball-to-material ratio is controlled at 25:1. Ball milling is performed at a speed of 1000 RPM for 18h in a high-speed ball-milling machine. Cooling water is used to cool the ball-milling tank throughout the ball milling process to control a temperature during the ball milling at 15±5°C. After the ball milling is completed, powder is taken out.
   A cold press machine is used to press the powder into a block, and the block is sealed in an ampoule. The ampoule is placed in a muffle furnace for sinter. A sinter temperature is controlled at 700°C, and sinter time is 24h. A sintered electrolyte sheet is ground into powder, that is, a corresponding Li₁₄SiP₆ solid electrolyte is obtained.
(2) Preparation of the solid-state battery: In addition to that 1.746 g of Li₉AlP₄ is replaced with 1.746 g of Lit₄SiP₆, steps for preparing the solid-state battery in Embodiment 3 are the same as those in Embodiment 1. The obtained solid-state battery is denoted as C3.

### Embodiment 4

### (1) Preparation of the phosphide solid electrolyte

In a glove compartment, according to a stoichiometric ratio of Lit₄GeP₆, a total of 5 g of lithium metal powder, germanium powder, and red phosphorus powder is accurately weighed and placed in a ball-milling tank lined with zirconia. Zirconia ball-milling beads are placed in the ball-milling tank. A ball-to-material ratio is controlled at 25:1. Ball milling is performed at a speed of 1000 RPM for 18h in a high-speed ball-milling machine. Cooling water is used to cool the ball-milling tank throughout the ball milling process to control a temperature during the ball milling at 15±5°C. After the ball milling is completed, powder is taken out.

A cold press machine is used to press the powder into a block, and the block is sealed in an ampoule. The ampoule is placed in a muffle furnace for sinter. A sinter temperature is controlled at 500°C, and sinter time is 24h. A sintered electrolyte sheet is ground into powder, that is, a corresponding Li₁₄GeP₆ solid electrolyte is obtained.

(2) Preparation of the solid-state battery: In addition to that 1.746 g of Li₉AlP₄ is replaced with 1.746 g of Li₁₄GeP₆, steps for preparing the solid-state battery in Embodiment 4 are the same as those in Embodiment 1. The obtained solid-state battery is denoted as C4.

### Embodiment 5

In addition to that 1.746 g of Li₉AlP₄ is replaced with 0.873 g of Li₉AlP₄ and 0.873 g of Li₉GaP₄ (where steps for preparing Li₉GaP₄ are the same as those in Embodiment 2), steps for preparing the solid-state battery in Embodiment 5 are the same as those in Embodiment 1. The obtained solid-state battery is denoted as C5.

### Embodiment 6

In addition to that Li₆PS₅Cl in step 1, step 2, and step 3 is replaced with Li₇P₃S₁₁, steps for preparing the solid-state battery in Embodiment 6 are the same as those in Embodiment 1. The obtained solid-state battery is denoted as C6.

### Embodiment 7

Steps for preparing the solid-state battery in Embodiment 7 are basically the same as those in Embodiment 1. A difference only lies in: In step 2, 58.2 g of Li₆PS₅Cl and 1.8 g of a nitrile butadiene rubber binder are replaced with 51 g of Li₆PS₅Cl and 9 g of a nitrile butadiene rubber binder. The obtained solid-state battery is denoted as C7.

### Embodiment 8

Steps for preparing the solid-state battery in Embodiment 8 are basically the same as those in Embodiment 1. A difference only lies in: In step 3, 1.746 g of Li₉AlP₄ and 4.074 g of Li₆PS₅Cl mixed powder and 0.18 g of a nitrile butadiene rubber binder are replaced with 1.53 g of Li₉AlP₄ and 3.57 g of Li₆PS₅Cl mixed powder and 0.9 g of a nitrile butadiene rubber binder. The obtained solid-state battery is denoted as C8.

### Embodiment 9

Steps for preparing the solid-state battery in Embodiment 9 are basically the same as those in Embodiment 1. A difference only lies in: In step 3, 1.746 g of Li₉AlP₄ and 4.074 g of Li₆PS₅Cl mixed powder is replaced with 5.238 g of Li₉AlP₄ and 0.582 g of Li₆PS₅Cl mixed powder. The obtained solid-state battery is denoted as C9.

### Embodiment 10

Steps for preparing the solid-state battery in Embodiment 10 are basically the same as those in Embodiment 1. A difference only lies in: In step 3, 1.746 g of Li₉AlP₄ and 4.074 g of Li₆PS₅Cl mixed powder is replaced with 0.291 g of Li₉AlP₄ and 5.529 g of Li₆PS₅Cl mixed powder. The obtained solid-state battery is denoted as C10.

### Embodiment 11

Steps for preparing the solid-state battery in Embodiment 11 are basically the same as those in Embodiment 1. A difference only lies in: In step 3, 1.746 g of Li₉AlP₄ and 4.074 g of Li₆PS₅Cl mixed powder is replaced with 5.82 g of Li₉AlP₄ powder. The obtained solid-state battery is denoted as C11.

### Embodiment 12

Steps for preparing the solid-state battery in Embodiment 12 are basically the same as those in Embodiment 1. A difference only lies in: In step 3, 1.746 g of Li₉AlP₄ and 4.074 g of Li₆PS₅Cl mixed powder is replaced with 0.116 g of Li₉AlP₄ and 5.704 g of Li₆PS₅Cl mixed powder. The obtained solid-state battery is denoted as C12.

### Embodiment 13

Steps for preparing the solid-state battery in Embodiment 13 are basically the same as those in Embodiment 1. A difference only lies in: In step 3, 1.746 g of Li₉AlP₄ and 4.074 g of Li₆PS₅Cl mixed powder is replaced with 4.074 g of Li₉AlP₄ and 1.746 g of Li₆PS₅Cl mixed powder. The obtained solid-state battery is denoted as C13.

### Embodiment 14

Steps for preparing the solid-state battery in Embodiment 14 are basically the same as those in Embodiment 1. Differences only lie in:
In step 2, a mass ratio of Li₆PS₅Cl to a nitrile butadiene rubber binder remained unchanged, and a total mass of Li₆PS₅Cl and the nitrile butadiene rubber binder is adjusted, so that the thickness of the first solid electrolyte layer is 10 µm.

In step 3, a mass ratio of Li₉AlP₄, Li₆PS₅Cl, and a nitrile butadiene rubber binder remained unchanged, and a total mass of Li₉AlP₄, Li₆PS₅Cl, and the nitrile butadiene rubber binder is adjusted, so that the thickness of the second solid electrolyte layer is 15 µm.

The obtained solid-state battery is denoted as C14.

### Embodiment 15

Steps for preparing the solid-state battery in Embodiment 15 are basically the same as those in Embodiment 1. Differences only lie in:
In step 2, a mass ratio of Li₆PS₅Cl to a nitrile butadiene rubber binder remained unchanged, and a total mass of Li₆PS₅Cl and the nitrile butadiene rubber binder is adjusted, so that the thickness of the first solid electrolyte layer is 200 µm.

In step 3, a mass ratio of Li₉AlP₄, Li₆PS₅Cl, and a nitrile butadiene rubber binder remained unchanged, and a total mass of Li₉AlP₄, Li₆PS₅Cl, and the nitrile butadiene rubber binder is adjusted, so that the thickness of the second solid electrolyte layer is 1 µm.

The obtained solid-state battery is denoted as C15.

### Embodiment 16

Steps for preparing the solid-state battery in Embodiment 16 are basically the same as those in Embodiment 1. Differences only lie in:
In step 2, D50 of Li₆PS₅Cl is 8 µm. In step 3, D50 of Li₆PS₅Cl is 2.2 µm, and D50 of Li₉AlP₄ is 2.2 µm.

### Embodiment 17

Steps for preparing the solid-state battery in Embodiment 17 are basically the same as those in Embodiment 1. Differences only lie in:
In step 2, D50 of Li₆PS₅Cl is 11 µm. In step 3, D50 of Li₆PS₅Cl is 4 µm, and D50 of Li₉AlP₄ is 3 µm.

### Comparative example 1

Steps for preparing the solid-state battery in Comparative example 1 are basically the same as those in Embodiment 1. Differences only lie in:
In step 3 for preparing the solid-state battery, 1.746 g of Li₉AlP₄ and 4.074 g of Li₆PS₅Cl mixed powder is replaced with 5.82 g of Li₆PS₅Cl powder. The obtained solid-state battery is denoted as DC1.

### Comparative example 2

(1) Li₉AlP₄ is prepared by using the same steps as those in Embodiment 1.
(2) Preparation of the solid-state battery

The following steps are all completed in a dry room of which a dew point is lower than -50°C.

Step 1: 75 g of NCM622 positive electrode material, 20 g of solid electrolyte Li₆PS₅Cl, 3 g of a nitrile butadiene rubber binder, and 2 g of acetylene black are added to 100 g of a toluene solvent, which are then stirred in a vacuum mixer to form a stable and uniform positive electrode slurry. The positive electrode slurry is evenly and intermittently coated to two sides of an aluminum foil (where a size of the aluminum foil is defined as a width of 160 mm and a thickness of 16 µm), which is then baked at 373 K. After being pressed by a roll press, a positive electrode material layer with a single side thickness of 80 µm is formed on the two sides of the aluminum foil, to obtain a positive electrode sheet.

Step 2: 62.274 g of Li₆PS₅Cl, 1.746 g of Li₉AlP₄, and 1.98 g of the nitrile butadiene rubber binder are placed into 66 g of the toluene solution, which are thoroughly stirred until a stable and uniform slurry is formed. The solution is continuously coated on the positive electrode sheet, which is then baked at 373 K to obtain a positive electrode sheet-solid electrolyte layer composite. A thickness of the solid electrolyte layer is 55 µm. In step 2, D50 of Li₆PS₅Cl is 4 µm, and D50 of Li₉AlP₄ is 1 µm.

Step 3: A positive electrode sheet-solid electrolyte layer composite layer is cut into a positive electrode sheet-solid electrolyte layer composite film with a size of 21 mm in length×41 mm in width.

Step 4: A lithium copper composite foil is selected as a negative electrode. A thickness of a lithium layer is 15 µm, and the composite foil is cut into a negative electrode film with a size of 20 mm×40 mm.

Step 5: The positive electrode sheet-solid electrolyte layer composite film obtained in step 3 and the negative electrode film obtained in step 4 are placed in alignment in a hot press machine, and hot pressing is performed at 453 K for 1h and pressure of 200 MPa. A sample is taken out after being vacuumed and sealed by using an aluminum-plastic film. Finally, the foregoing pressed sample is pressed in an isostatic press at 200 MPa for 300 seconds (s). Then, the solid-state battery in this embodiment is obtained. The obtained solid-state battery is denoted as DC2.

### Comparative example 3

(1) Li₉AlP₄ is prepared by using the same steps as those in Embodiment 1.
(2) Preparation of the solid-state battery

The following steps are all completed in a dry room of which a dew point is lower than -50°C.

Step 1: 75 g of NCM622 positive electrode material and 20 g of solid electrolyte Li₉AlP₄, 3 g of a nitrile butadiene rubber binder, and 2 g of acetylene black are added to 100 g of a toluene solvent, which are then stirred in a vacuum mixer to form a stable and uniform positive electrode slurry. The positive electrode slurry is evenly and intermittently coated to two sides of an aluminum foil (where a size of the aluminum foil is defined as a width of 160 mm and a thickness of 16 µm), which is then baked at 373 K. After being pressed by a roll press, a positive electrode material layer with a single side thickness of 80 µm is formed on the two sides of the aluminum foil, to obtain a positive electrode sheet.

Step 2: 64.02 g of Li₉AlP₄ and 1.98 g of the nitrile butadiene rubber binder are placed into 66 g of the toluene solution, which are thoroughly stirred until a stable and uniform slurry is formed. The solution is continuously coated on the positive electrode sheet, which is then baked at 373 K to obtain a positive electrode sheet-solid electrolyte layer composite. A thickness of the solid electrolyte layer is 55 µm. In step 2, D50 of Li₉AlP₄ is 4 µm.

Step 3: A positive electrode sheet-solid electrolyte layer composite layer is cut into a positive electrode sheet-solid electrolyte layer composite film with a size of 21 mm in length×41 mm in width.

Step 4: A lithium copper composite foil is selected as a negative electrode. A thickness of a lithium layer is 15 µm, and the composite foil is cut into a negative electrode film with a size of 20 mm×40 mm.

Step 5: The positive electrode sheet-solid electrolyte layer composite film obtained in step 3 and the negative electrode film obtained in step 4 are placed in alignment in a hot press machine, and hot pressing is performed at 453 K for 1h and pressure of 200 MPa. A sample is taken out after being vacuumed and sealed by using an aluminum-plastic film. Finally, the foregoing pressed sample is pressed in an isostatic press at 200 MPa for 300 seconds (s). Then, the solid-state battery in this embodiment is obtained. The obtained solid-state battery is denoted as DC3.

Cycle life testing of a battery is performed on the solid-state battery C1 to the solid-state battery C17 obtained in Embodiment 1 to Embodiment 17 and the solid-state battery DC1 to the solid-state battery DC3 obtained in Comparative example 1 to Comparative example 3. A testing method is as follows.

Five copies of the battery prepared in each Embodiment and Comparative example are selected, and charge/discharge cycle testing is performed on the batteries at 0.1 C under conditions of 298 K±1 K on a LAND CT 2001C rechargeable battery performance measurement apparatus. Steps are as follows: Each battery is rested for 10 min, constant-current charging is performed on the batteries until a voltage reached 4.2 V, each battery is rested for 10 min, and then constant-current discharging is performed on the batteries until a voltage drops to 2.6 V. This process is one cycle. A first-time discharge capacity is recorded, and a first-time discharge specific capacity=the first-time discharge capacity/a mass of a positive electrode active material. The steps are repeated. An electrochemical workstation EIS is used to record alternating current impedance of each battery at an SOC of 100% of one cycle, ten cycles, and 20 cycles, and an average value of each group is used as cyclic impedance, which is separately denoted as 1^{st} impedance, 10^{th} impedance, and 20^{th} impedance. During the cycle, when a capacity of the battery is lower than 80% of the first-time discharge capacity, the cycle is terminated. In this case, a number of times of the cycle is the cycle life of the battery, and an average value of each group is obtained. Data of the parameter and an average first-time discharge capacity of the battery is shown in the following table.

**Table 1: Electrochemical performance data in each Embodiment**

| | First-time discharge specific capacity (based on the mass of the positive electrode active material, mAh/g) | 1^{st} impedance | 10^{th} impedance | 20^{th} impedance | Battery life |
|---|---|---|---|---|---|
| Embodiment 1 | 173 | 6.3 | 8.0 | 8.5 | 155 |
| Embodiment 2 | 171 | 6.6 | 8.1 | 9.2 | 147 |
| Embodiment 3 | 165 | 8.8 | 11.0 | 13.0 | 140 |
| Embodiment 4 | 171 | 6.8 | 7.7 | 8.1 | 160 |
| Embodiment 5 | 173 | 6.3 | 7.8 | 8.5 | 160 |
| Embodiment 6 | 168 | 10.2 | 12.7 | 13.5 | 156 |
| Embodiment 7 | 130 | 35.0 | 38.0 | 42.0 | 70 |
| Embodiment 8 | 135 | 27.5 | 30.0 | 33.0 | 73 |
| Embodiment 9 | 166 | 7.0 | 8.8 | 10.2 | 122 |
| Embodiment 10 | 175 | 6.0 | 10.9 | 11.7 | 107 |
| Embodiment 11 | 160 | 7.7 | 10.2 | 14.0 | 112 |
| Embodiment 12 | 173 | 6.0 | 10.5 | 11.7 | 110 |
| Embodiment 13 | 170 | 6.8 | 9.0 | 9.2 | 149 |
| Embodiment 14 | 177 | 4.4 | 5.0 | 5.3 | 102 |
| Embodiment 15 | 161 | 11.2 | 16.9 | 20.0 | 78 |
| Embodiment 16 | 170 | 6.4 | 10.2 | 12.7 | 90 |
| Embodiment 17 | 171 | 6.6 | 13.0 | 16.0 | 44 |
| Comparative example 1 | 139 | 20.8 | 33.5 | 47.1 | 52 |
| Comparative example 2 | 97 | 33.0 | 82.1 | - | 14 |
| Comparative example 3 | 64 | 40.8 | 135.0 | - | 10 |

The reduction potential of each solid electrolyte is tested by using a CV curve. Specifically, an electrolyte of the second solid electrolyte layer in each of Embodiment 1 to Embodiment 17 and Comparative example 1 and an electrolyte of the solid electrolyte layer in each of Comparative example 2 and Comparative example 3 are selected. 10 mg of the electrolyte from the second solid electrolyte layer or 10 mg of the electrolyte from the solid electrolyte layer is uniformly mixed with 0.1 mg of acetylene black, which is used as a side of a battery electrode. A lithium copper composite foil with a thickness of 15 µm and φ 15 mm is used as a counter electrode. 260 mg of Li₆PS₅Cl is used as an intermediate electrolyte layer. A coin battery 1 is assembled. The coin battery 1 is connected to the electrochemical workstation. Scanning is performed from an OCV state to 0 V at a rate of 0.1 mV/s by using a CV program. A voltage when a reduction current occurred is recorded as the reduction potential of the electrolyte.

260 mg of the electrolyte from the second solid electrolyte layer or 260 mg of the electrolyte from the solid electrolyte layer is weighted and placed in a circular mold of d=15 mm. After an electrolyte sheet is pre-formed on a powder cold press machine at 50 MPa, a carbon-coated aluminum foil of φ 15 mm is attached on two sides of the electrolyte, and is formed again at 500 MPa. The carbon-coated aluminum foil is pressed onto the electrolyte sheet. A thickness of the electrolyte layer is accurately measured by using a micrometer, and is denoted as L. The electrolyte layer is encapsulated in a 2025 coin battery box, to form a battery 2.

The battery 1 is connected to the electrochemical workstation. The EIS program is used, an amplitude is set to 10 mV, and a scanning frequency range is 7 MHz to 1 Hz, to obtain impedance R₁ of the electrolyte sheet through measurement, initial ionic conductivity σᵢ of the electrolyte may be obtained through a formula σᵢ=L/R₁S. S=πd²/4.

A direct current polarization program (PPI) is used, a voltage is set to U=50 mV, and test time is 1h. A steady-state current I of the battery 2 in this state is tested, and impedance R₂=U/I is calculated. Electron conductivity of the electrolyte of the second solid electrolyte layer may be obtained through calculation by using σ_{c}=L/R₂S.

In Table 2, "an electrolyte of the second solid electrolyte layer or an electrolyte of the solid electrolyte layer" is the electrolyte of the second solid electrolyte layer in each of Embodiment 1 to Embodiment 17 and Comparative example 1 or the electrolyte of the solid electrolyte layer in each of Comparative example 2 and Comparative example 3.

**Table 2 Reduction potential, ionic conductivity, and electron conductivity of each solid electrolyte**

| | Reduction potential (V) of an electrolyte of the second solid electrolyte layer or an electrolyte of the solid electrolyte layer | Initial ionic conductivity (mS/cm) of the electrolyte of the second solid electrolyte layer or the electrolyte of the solid electrolyte layer | Electron conductivity (nS/cm) of the electrolyte of the second solid electrolyte layer or the electrolyte of the solid electrolyte layer |
|---|---|---|---|
| Embodiment 1 | 0.62 | 5.2 | 24 |
| Embodiment 2 | 0.55 | 4.8 | 31 |
| Embodiment 3 | 0.87 | 4.2 | 18 |
| Embodiment 4 | 0.77 | 4.8 | 26 |
| Embodiment 5 | 0.57 | 5.1 | 28 |
| Embodiment 6 | 0.70 | 3.7 | 20 |
| Embodiment 7 | 0.62 | 5.2 | 26 |
| Embodiment 8 | 0.88 | 0.7 | 24 |
| Embodiment 9 | 0.33 | 3.9 | 81 |
| Embodiment 10 | 1.18 | 6.0 | 14 |
| Embodiment 11 | 0.13 | 2.7 | 106 |
| Embodiment 12 | 1.42 | 6.4 | 11 |
| Embodiment 13 | 0.46 | 4.4 | 46 |
| Embodiment 14 | 0.62 | 5.2 | 32 |
| Embodiment 15 | 0.62 | 5.2 | 18 |
| Embodiment 16 | 0.61 | 5.5 | 25 |
| Embodiment 17 | 0.60 | 5.7 | 21 |
| Comparative example 1 | 0.62 | 5.2 | 6 |
| Comparative example 2 | 1.71 | 6.8 | 26 |
| Comparative example 3 | 0.04 | 2.7 | 128 |

Component composition of the electrolyte interfacial layer may be tested by using XPS. A negative electrode sheet of the battery is removed, a surface of a sample is irradiated with X-rays, and escaped photoelectrons are collected to form a characteristic photoelectron spectrum. After the spectrum is calibrated, smoothed, and background subtracted, peak separation is performed, and composition and proportion of the interfacial layer are determined based on peak positions and peak areas.

**Table 3 Thickness, composition, and proportion of a negative electrode interfacial layer**

| | Li₃P | Li₂S | Li₂Sₐ | M1_{b}P | M2_{c}S | LiCl |
|---|---|---|---|---|---|---|
| Embodiment 1 | 15.5 | 28.9 | 8.2 | 22.7 | 17.5 | 7.2 |
| Embodiment 2 | 17.7 | 28.1 | 8.5 | 21.8 | 17.7 | 6.2 |
| Embodiment 3 | 15.9 | 26.5 | 9.0 | 22.3 | 20.2 | 6.4 |
| Embodiment 4 | 17.3 | 26.4 | 8.0 | 21.3 | 21.3 | 5.6 |
| Embodiment 5 | 17.1 | 28.8 | 7.2 | 22.4 | 18.2 | 6.3 |
| Embodiment 6 | 17.7 | 30.2 | 9.4 | 20.8 | 21.9 | 0.0 |
| Embodiment 7 | 15.3 | 27.6 | 9.2 | 23.5 | 18.4 | 6.1 |
| Embodiment 8 | 16.3 | 29.6 | 6.1 | 22.4 | 19.4 | 6.1 |
| Embodiment 9 | 24.0 | 15.0 | 5.0 | 40.0 | 13.0 | 3.0 |
| Embodiment 10 | 5.3 | 30.9 | 9.4 | 15.0 | 30.9 | 8.4 |
| Embodiment 11 | 46.0 | 1.0 | 0.0 | 53.0 | 0.0 | 0.0 |
| Embodiment 12 | 2.9 | 35.6 | 9.6 | 7.7 | 35.6 | 8.7 |
| Embodiment 13 | 20.0 | 18.0 | 8.0 | 33.0 | 18.0 | 3.0 |
| Embodiment 14 | 18.0 | 25.0 | 8.0 | 23.0 | 18.0 | 8.0 |
| Embodiment 15 | 12.5 | 31.3 | 8.3 | 22.9 | 17.7 | 7.3 |
| Embodiment 16 | 15.3 | 27.6 | 8.2 | 24.5 | 15.3 | 9.2 |
| Embodiment 17 | 15.3 | 26.5 | 8.0 | 25.5 | 15.1 | 9.2 |
| Comparative example 1 | 4.4 | 31.0 | 9.3 | 12.7 | 34.1 | 8.5 |
| Comparative example 2 | 18.9 | 26.3 | 7.5 | 24.1 | 15.1 | 8.1 |
| Comparative example 3 | 44.0 | 0.0 | 0.0 | 56.0 | 0.0 | 0.0 |

It can be understood from the foregoing data that: In Comparative example 1, phosphide is not included, and the interfacial layer has high impedance, causing a short cycle life of the battery. In Comparative example 2, because the first sulfide electrolyte layer does not exist, overall electronic conductivity of the battery is high, and self-discharging is caused, further affecting performance of the battery. In addition, the phosphide electrolyte is directly in contact with the positive electrode layer, and is more easily oxidized by the positive electrode. Consequently, more side reactions are generated on the positive electrode side, affecting the performance of the battery. In Comparative example 3, the phosphide solid electrolyte is only used as the solid electrolyte and the sulfide solid electrolyte is not used. There are same and more severe problems as those in Comparative example 2.

In the descriptions of this specification, descriptions of a reference term such as "an embodiment", "some embodiments", "an example", "a specific example", or "some examples" mean that a specific feature, structure, material, or characteristic described with reference to the embodiment or the example is included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of embodiments or examples.

In addition, terms "first" and "second" are merely used for the purpose of description, but cannot be understood as indicating or implying relative importance. In the descriptions of the present disclosure, "a number of" means at least two, such as two and three unless it is specifically defined otherwise.

Although the embodiments of the present disclosure have been shown and described above, it can be understood that the foregoing embodiments are exemplary and cannot be understood as limitation to the present disclosure. A person of ordinary skill in the art can make changes, modifications, replacements, and variations to the foregoing embodiments within the scope of the present disclosure.

## Claims

1. A solid electrolyte, comprising a first solid electrolyte layer and a second solid electrolyte layer, the first solid electrolyte layer comprising a first sulfide solid electrolyte, and the second solid electrolyte layer comprising a phosphide solid electrolyte.

2. The solid electrolyte according to claim 1, wherein the phosphide solid electrolyte comprises a phosphorus element having a valency of -3.

3. The solid electrolyte according to claim 1 or 2, wherein a reduction potential of the phosphide solid electrolyte is between 0 V and 1.2 V.

4. The solid electrolyte according to any one of claims 1 to 3, wherein the phosphide solid electrolyte is at least one of Li₃ₓ₋₃APₓ and Li_{3y-4}BP_{y}, the element P has a valency of -3, the element A is selected from at least one of Al, Ga, and In, the element B is selected from at least one of Si, Ge, and Sn, x is an integer between 2 and 4, and y is an integer between 2 and 6.

5. The solid electrolyte according to any one of claims 1 to 4, wherein the phosphide solid electrolyte comprises one or more of Li₉AlP₄, Li₉GaP₄, Li₉InP₄, Li₃AlP₂, Li₃GaP₂, Li₃InP₂, Li₈SiP₄, Li₈GeP₄, Li₈SnP₄, Li₂SiP₂, Li₂GeP₂, Li₂SnP₂, Lit₄SiP₆, and Lit₄GeP₆.

6. The solid electrolyte according to any one of claims 1 to 5, wherein the first sulfide solid electrolyte is selected from one or more of Li₃PS₄, Li₁₀GeP₂Si₂, Li_{9.}s₄Si_{1.74}P_{1.44}S_{11.7}Cl_{0.3}, Li_{6-z}PS_{5-z}Cl_{1+z}, LiI-(70Li₂S-30P₂S₅), Li₇P₃S₁₁, Li₄PS₄I, Li₇P₂S₈I, and Li₂SiS₃, and in Li_{6-z}PS_{5-z}Cl_{1+z}, a value range of z is 0≤z≤1.

7. The solid electrolyte according to any one of claims 1 to 6, wherein a total mass of the first solid electrolyte layer is used as a reference, and content of the first sulfide solid electrolyte in the first solid electrolyte layer is between 90 wt.% and 99.9 wt.%.

8. The solid electrolyte according to any one of claims 1 to 7, wherein the second solid electrolyte layer further comprises a second sulfide solid electrolyte.

9. The solid electrolyte according to any one of claim 8, wherein a total mass of the second solid electrolyte layer is used as a reference, and content of the second sulfide solid electrolyte and the phosphide solid electrolyte in the second solid electrolyte layer is between 90 wt.% and 99.9 wt.%; and
a total mass of the second sulfide solid electrolyte and the phosphide solid electrolyte in the second solid electrolyte layer is used as a reference, and in the second solid electrolyte layer, content of the second sulfide solid electrolyte is between 10 wt.% and 95 wt.%, and content of the phosphide solid electrolyte is between 5 wt.% and 90 wt.%.

10. The solid electrolyte according to claim 9, wherein the total mass of the second sulfide solid electrolyte and the phosphide solid electrolyte in the second solid electrolyte layer is used as a reference, and in the second solid electrolyte layer, the content of the second sulfide solid electrolyte is between 30 wt.% and 70 wt.%, and the content of the phosphide solid electrolyte is between 30 wt.% and 70 wt.%.

11. The solid electrolyte according to any one of claims 8 to 10, wherein the second sulfide solid electrolyte is selected from one or more of Li₃PS₄, Li₁₀GeP₂S₁₂, Li_{9.54}Si_{1.74}P_{1.44}S_{11.7}Cl_{0.3}, Li_{6-z}PS_{5-z}Cl_{1+z}, LiI-(70Li₂S-30P₂S₅), Li₇P₃S₁₁, Li₄PS₄I, Li₇P₂S₈I, and Li₂SiS₃; and in Li_{6-z}PS_{5-z}Cl_{1+z}, a value range of z is 0≤x≤1.

12. The solid electrolyte according to any one of claims 1 to 11, wherein a thickness of the first solid electrolyte layer is between 15 µm and 200 µm; and a thickness of the second solid electrolyte layer is between 1 µm and 15 µm.

13. The solid electrolyte according to any one of claims 1 to 12, wherein the thickness of the first solid electrolyte layer is between 15 µm and 50 µm; and the thickness of the second solid electrolyte layer is between 3 µm and 7 µm.

14. The solid electrolyte according to any one of claims 8 to 11, wherein D50 of the first sulfide solid electrolyte is between 1 µm and 10 µm,D50 of the phosphide solid electrolyte is between 0.5 µm and 4 µm, and D50 of the second sulfide solid electrolyte is between 0.5 µm and 4 µm.

15. A solid-state battery, comprising a positive electrode, a negative electrode, and the solid electrolyte according to any one of claims 1 to 14, the solid electrolyte being arranged between the positive electrode and the negative electrode, the first solid electrolyte layer being arranged between the positive electrode and the second solid electrolyte layer, and the second solid electrolyte layer being arranged between the first solid electrolyte layer and the negative electrode.

16. The solid-state battery according to claim 15, wherein after the solid-state battery is charged and discharged for a first time, an interfacial layer is formed between the second solid electrolyte layer and the negative electrode, and the interfacial layer comprises Li₃P.

17. The solid-state battery according to claim 16, wherein content of Li₃P in the interfacial layer is between 5 wt.% and 25 wt.% based on a mass of the interfacial layer.

18. The solid-state battery according to claim 16 or 17, wherein the interfacial layer further comprises one or more of Li₂S, Li₂Sₐ, LiX, M1_{b}P, and M2_{c}S; X is one or more of F, Cl, Br, and I; M1 and M2 are each independently selected from one or more of Si, Ge, Sn, Al, Ga, and In; and value ranges of a, b, and c are respectively 2≤a≤8, 0.75≤b≤1.5, and 0.5≤c≤1.

19. The solid-state battery according to any one of claims 15 to 18, wherein the negative electrode comprises lithium metal or a lithium alloy.

20. An electrical device, comprising the solid-state battery according to any one of claims 15 to 19.
